# EUROPEAN PATENT APPLICATION

(11) **EP 2 127 998 A1**
(43) Date of publication of application: **02.12.2009**
(21) Application number: 08009936.9
(22) Date of filing: 30.05.2008
(51) Int. Cl.: B62D 5/093

(54) **Hydraulic steering unit**

(71) Applicant: Sauer-Danfoss Holding ApS, 6430 Nordborg (DK)
(72) Inventor: Blonski, Janusz, 6400 Soenderborg (DK); Osaki, Yasutomo, Hyogo-ken, 663-8023 (JP); Horii, Kazumasa, Osaka pref, 560-8882 (JP); Jensen, Knud Meldgaard, Kobe 659 0032 Hyogo (JP)
(74) Representative: Knoblauch, Andreas

(57) **Abstract**

Hydraulic steering unit (1) comprising a supply port arrangement having a high pressure port (2) and a low pressure port (5), a working port arrangement having two working ports (7, 8), and control means arranged between the supply port arrangement and the working port arrangement and having a flow meter (11) and valving means, the valving means being connectable to a steering element (10) and defining orifices (Ad, A2-A5, AN), the orifices changing their area between a neutral position, a normal operating position and a maximum displacement position for each working port (7, 8).

A hydraulic steering unit is provided giving the user the feeling of a hard end stop at maximum displacement.

This object is solved in that in the maximum displacement position an end stop orifice (AN) connects the high pressure port (2) upstream the flow meter (11) with the low pressure port (5).

## Description

The present invention relates to a hydraulic steering unit comprising a supply port arrangement having a high pressure port and a low pressure port, a working port arrangement having two working ports, and control means arranged between the supply port arrangement and the working port arrangement and having a flow meter and valving means, the valving means being connectable to a steering element and defining orifices, the orifices changing their area between a neutral position, a normal operating position and a maximum displacement position for each working port.

Such a hydraulic steering unit is known from US 6 769 249 B2. The valving means is formed by a sleeve arranged within a bore of a housing and a spool arranged within the sleeve. When a steering element such as a steering wheel is actuated, the sleeve is rotated relatively to the spool thereby opening some of the orifices. Hydraulic fluid is guided to the flow meter which has the form of a gerotor motor. The rotational movement of the star of this motor causes the spool to follow the rotational movement of the sleeve thereby closing again some of the orifices. When the spool and the sleeve are rotated relative to each other in an maximum displacement angle an additional orifice is opened to supply fluid to a working port downstream of the fluid meter. This is in some cases necessary to compensate for leakages in the steering motor connected to the hydraulic steering unit.

Another hydraulic steering unit of the kind mentioned above is known from US 5 136 844. When the steering motor connected to the steering unit reaches an end stop the pressure in a pressure chamber is elevated in order to actuate a brake acting on the star wheel of the fluid meter. In this case a higher force is necessary to turn the steering wheel connected to the steering unit. This gives the operator the feeling of a mechanical end stop.

A similar solution is disclosed in US 3 801 239.

Simulating the mechanical end stop by means of a brake member requires additional parts making the steering unit expensive.

The object underlying the present invention is to provide a hydraulic steering unit giving the user the feeling of a hard end stop at maximum displacement.

This object is solved in a hydraulic steering unit of the kind mentioned above in that in the maximum displacement position an end stop orifice connects the high pressure port upstream the flow meter with the low pressure port.

In the maximum displacement position of the valving means a kind of short circuit is established between the high pressure port and the low pressure port so that the inlet pressure of the fluid meter is lowered. In this case the fluid meter has to be operated as auxiliary pump like in an emergency steering, i.e. in a high torque mode. In this case the slippage can be reduced to zero at a rather high maximum torque, e.g. at a torque of 25 Nm. This high torque gives the operator the impression to act against a mechanical end stop.

In a preferred embodiment an inlet orifice is arranged upstream the flow meter and the end stop orifice opens faster than the inlet orifice. The inlet orifice is known per se in the art. It opens in order to allow fluid to pass to the fluid meter. When the end stop orifice opens faster than the inlet orifice, in other words if the characteristic curve of the end stop orifice is steeper than the characteristic curve of the inlet orifice, the end stop is reached as quick as possible. The operator gets the feeling that he indeed hits against a mechanical fixed obstacle. The pressure drop at the inlet of the fluid meter is rather fast.

Advantageously a neutral orifice is arranged parallel to the end stop orifice wherein the neutral orifice reaches its minimum opening area before the end stop orifice starts opening. The hydraulic steering unit of this kind is an open centre unit. In the neutral position hydraulic fluid can pass from the high pressure port, e.g. the pump port, to the low pressure port, e.g. the tank port. However, when the hydraulic steering unit is operated, this neutral orifice is progressively closed in order to supply more and more fluid to the fluid meter and to the steering motor connected to the steering unit. However, when a maximum displacement is arranged, another orifice, namely the end stop orifice, opens suddenly in order to generate a pressure drop at the inlet of the fluid meter.

Advantageously the valving means comprises a sleeve arranged in a housing and a spool arranged within the sleeve wherein the end stop orifice starts opening at a turning angle between the spool and the sleeve greater than or equal 9°. Therefore, the operator gets a tight or hard reaction of the steering wheel at the end stop. There will be no further movement of the steering wheel (or any other steering element) after reaching the end position. In extreme cases the turning angle between the spool and the sleeve can reach the 9° during normal steering if the operator turns the steering wheel to fast or with a rather high torque. However, this is not a problem since in this case the rotational speed of the steering wheel is lowered by means of the emergency steering function of the fluid meter which in turn lowers the rotational displacement between the spool and the sleeve so that the operator can continue steering under normal conditions.

In a preferred embodiment the neutral orifice comprises a first opening in the spool and the end stop orifice comprises for each working direction a second opening in the spool arranged in a predetermined distance in circumferential direction relative to the first opening. Therefore, the neutral orifice and the end stop orifice can have the same bore in the sleeve. This reduces production costs and makes the construction rather simple.

In a preferred embodiment the neutral orifice and the end stop orifice comprise at least one common opening. In such a steering unit the neutral orifice closes after a certain degree of turning of the steering wheel and opens again after a further turning.

The invention will be explained below in a preferred embodiment and the associated drawings.
- Fig. 1: shows a circuit diagram of the hydraulic steering unit in a neutral position,
- Fig. 2: shows the circuit diagram of the steering unit in a position up to approximately 9,5° turning angle between a spool and a sleeve,
- Fig. 3: shows the circuit diagram of the steering unit in the end stop position in an area of approximately 9,5° to 11,2° turning angle between the spool and the sleeve,
- Fig. 4: shows the opening degrees of the orifices of the hydraulic steering unit,
- Fig. 5: shows the spool of the steering unit,
- Fig. 6: shows the sleeve of the steering unit,
- Fig. 7: shows the development of sleeve and spool at an angle of 0°,
- Fig. 8: shows the development of sleeve and spool at an angle of 5°,
- Fig. 9: shows the development of spool and sleeve at an angle of 9°,
- Fig. 10: shows the development of spool and sleeve at an angle of 11,6°, and
- Fig. 11: shows a further embodiment of a steering unit.

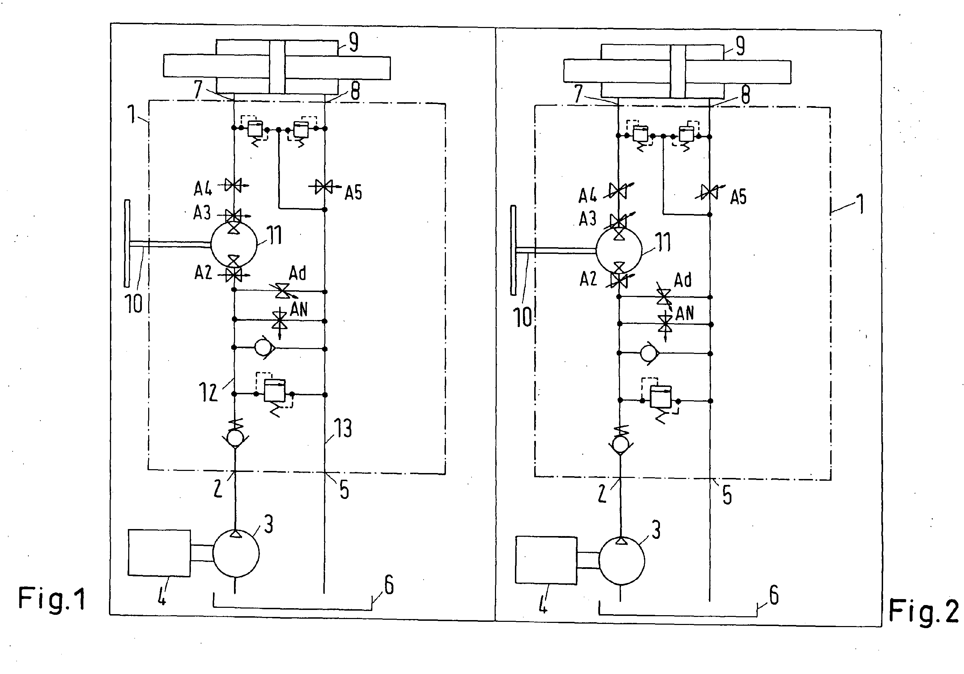

Fig. 1 shows schematically a circuit diagram of a hydraulic steering unit 1. The steering unit 1 comprises a supply port arrangement having a high pressure port 2 connected to a pump 3 which is driven by a motor 4, and a low pressure port 5 connected to a tank 6.

The hydraulic steering unit 1 furthermore comprises two working ports 7, 8 which are connected to a steering motor 9. The steering motor 9 is connected in a manner not shown in the drawing to steered wheels or other means for steering a vehicle.

The steering unit 1 is further connected to a steering wheel 10 or any other kind of steering element with which the hydraulic steering unit is operated.

The hydraulic steering unit 1 comprises control means arranged between the supply port arrangement 2, 5 and the working port arrangement 7, 8. The control means comprises a flow meter 11 and a valving means, the valving means comprising a plurality of orifices or throttles having a variable opening area or aperture cross section.

The valving means comprise an inlet orifice A2 upstream of the flow meter 11, a neutral orifice Ad connecting a pressure line 12 between the high pressure port 2 and the inlet orifice A2 with a low pressure line 13 connected to the low pressure or tank port 5. Furthermore, the valving means comprise two working orifices A3, A4 and a return orifice A5. Insofar the steering unit shown in Fig. 1 corresponds to steering units known in the state of the art.

Additionally an end stop orifice AN is provided connecting the high pressure port 2 upstream the flow meter 11 and upstream the inlet orifice A2 with the low pressure port 5. The end stop orifice AN is arranged parallel to the neutral orifice Ad, however, the end stop orifice AN opens only, when the neutral orifice Ad is closed.

In the neutral position of the steering unit 1 all orifices A2-A5, AN are closed except the neutral orifice Ad. Therefore, hydraulic fluid supplied by the pump 3 through the pressure port 2 is returned through the neutral orifice Ad to the tank. Therefore, the steering unit 1 is an open centre steering unit.

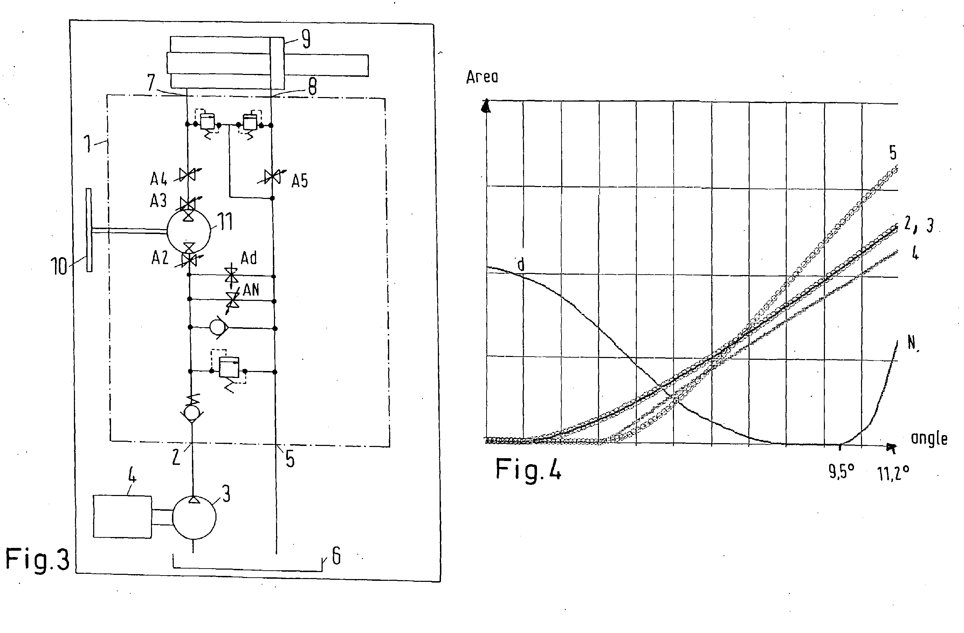

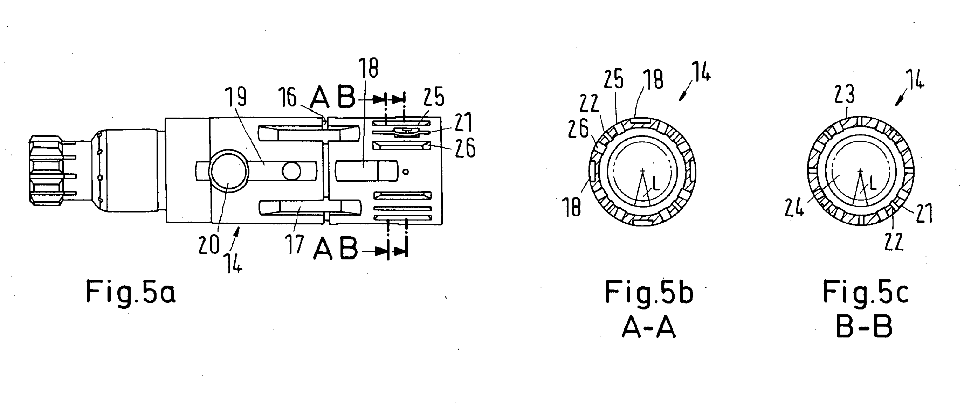

During normal steering, i.e. up to approximately 9,5° turning angle between a spool and a sleeve (shown in Figs. 5 to 10) the neutral orifice Ad is actuated to make the aperture cross section smaller while the other orifices A2-A5 are actuated to make the aperture cross section larger. This behaviour is schematically shown in Fig. 4 showing the characteristic curves of the orifices Ad, A2-A5 and AN.

In an end stop position (shown in Fig. 3), i.e. in a maximum displacement angle between the sleeve and the spool in an area of approximately 9,5° to 11,2°, the neutral orifice Ad is fully closed, the orifices A2-A5 remain open and the end stop orifice AN is open. As comes out from Fig. 4 the end stop orifice AN opens much faster than the inlet orifice A2, in other words, the characteristic curve of the end stop orifice AN is much steeper than the characteristic curve of the inlet orifice A2.

In this end stop position the end stop orifice AN establishes a sort of short circuit between the high pressure port 2 and the low pressure port 5 upstream the flow meter 11. Therefore, the flow meter 11 does not longer receive any hydraulic fluid under higher pressure.

When an operator further operates the steering wheel 10 he has to operate the flow meter 11 as an auxiliary pump in an emergency steering mode. Therefore, the torque for turning the steering wheel 10 rises dramatically so that at a torque of approximately 22 Nm there is no slippage or at least the slippage is close to zero. Therefore, the operator gets the feeling that he runs against a mechanical end stop.

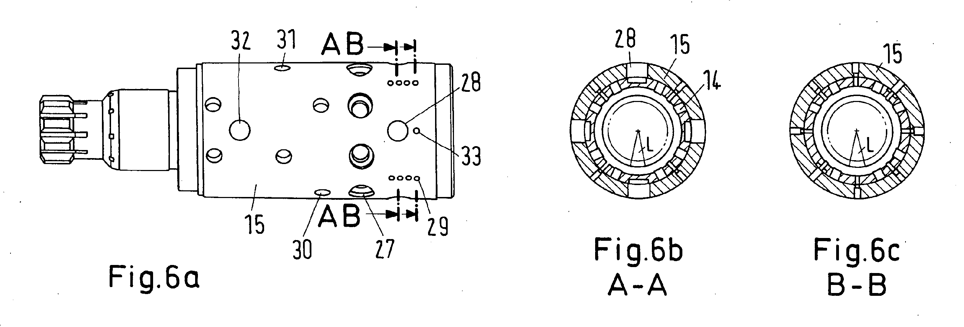

As mentioned above the steering unit 1 comprises a spool 14 (shown in Fig. 5) and a sleeve 15 (shown in Fig. 6). In both figures are shown sections A-A and B-B in order to identify opening and grooves. An "opening" is defined as through-going opening whereas a "groove" is defined as a recess in the circumferential surface of the spool 14.

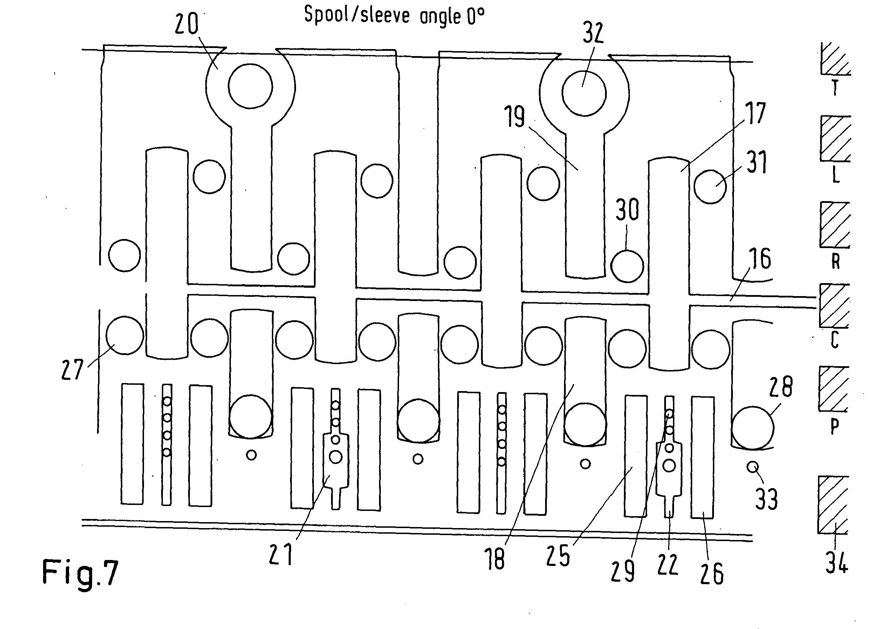

Fig. 7 to 10 show schematically a development of the cylindrical surface of the spool 14 and the sleeve 15 in order to show the different overlapping areas between openings in the sleeve 15 and openings or grooves of the spool 14. The size of overlap defines the size of an aperture cross section of each orifice or throttle.

Spool 14 comprises a circumferential groove 16 which is connected to axially running grooves 17 extending axially in both directions from the circumferential groove 16.

Sleeve 14 furthermore comprises a set of grooves 18 arranged between grooves 17 on one axial side of the circumferential groove 16 and a set of grooves 19 arranged between grooves 17 on the other side of the circumferential groove 16. Grooves 19 are connected to openings 20.

Spool 14 furthermore comprises grooves 21 continuing in a slot like opening 22 penetrating the wall 23 of the sleeve 14 surrounding a hollow interior 24. The pressure in the interior of spool 14 corresponds to the pressure at the low pressure port 5.

In circumferential direction on both sides of groove 22 are arranged slot like openings 25, 26. These openings 25, 26 are part of the end stop orifice AN.

Fig. 6 shows the sleeve 15 surrounding the spool 14 (shown only in Figs. 6b and 6c).

Sleeve 15 comprises servo-openings 27, working pressure openings 28, auxiliary pressure openings 29, working openings 30 and 31 and tank openings 32. Furthermore, small pressure openings 33 are arranged axially off-set with respect to the working pressure openings 28.

The position of the grooves and openings of the spool 14 and the openings of the sleeve 15 are shown in Figs. 7 to 10 for different turning angles between the spool 14 and the sleeve 15. A housing 34 having a number of circumferentially extending grooves P, C, R, L, and T is shown schematically in order to understand the function of the steering unit, which is basically the same as of a conventional steering unit, for example a steering unit sold by the applicant Sauer-Danfoss ApS under the name "OSP". However, in principal other steering units are possible, e.g. a LS-steering unit or other types of steering units sold by the applicant. The numerals used in Figs. 5 and 6 are used in Figs. 7 to 10 for the same parts.

Fig. 7 shows the neutral position the circuit diagram of which is shown in Fig. 1. The working openings 30, 31 in the sleeve 15 are out of overlapping with the grooves 17 on the spool 14. Therefore, the orifices A4, A5 are closed. The working pressure openings 28 overlap the grooves 18. However, since the grooves 18 do not have any overlapping with the servo-openings 27, the inlet orifice A2 is closed, too. The auxiliary openings 29 overlap the opening 22 in the spool 14. Since these auxiliary openings are in contact with the groove P in the housing which is connected with the high pressure port 2, hydraulic fluid flows into the interior 24 of the sleeve 14 and from there back to the low pressure port 5. The auxiliary openings 29 together with the openings 22 form the neutral orifice Ad.

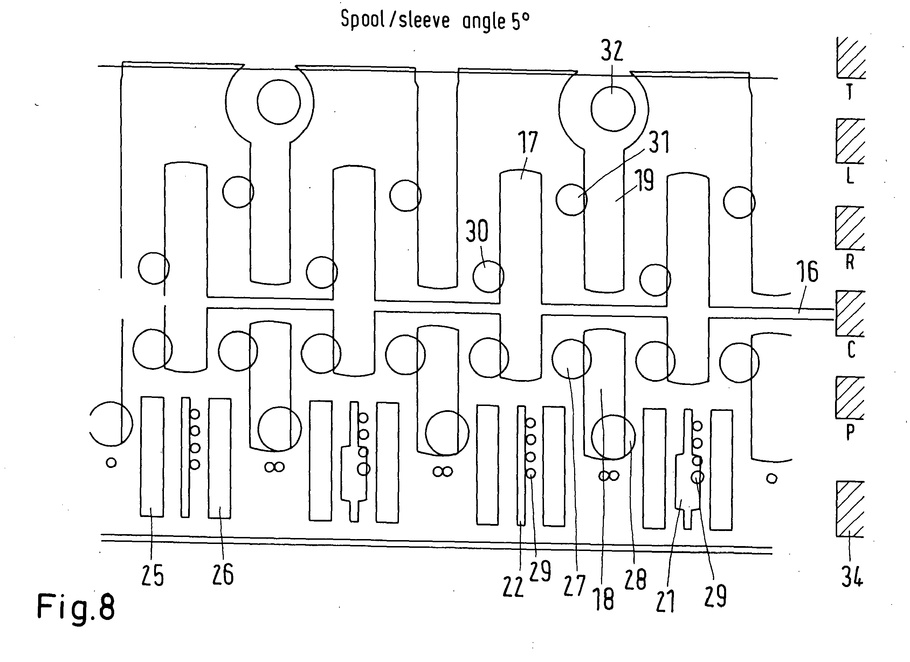

When the spool 14 and the sleeve 15 are turned relative to each other by an angle of 5° (shown in Fig. 8) the neutral orifice Ad is closed progressively. The auxiliary openings 29 overlap groove 21 only partly so that part of the pressurised fluid from groove P runs into the interior of the spool 14 via openings 22. Some of the auxiliary openings 29 come completely out of overlap with opening 22 so that the aperture cross section of neutral orifice Ad is made smaller.

The working pressure openings 28 overlap grooves 18. The grooves 18 overlap every second servo-opening 27. Fluid coming out of servo-openings 27 passes through groove C in housing 34 to groove 17 and from there to working opening 30 in order to flow to the groove R in the housing 24. Fluid coming back from the steering motor 9 via groove L flows through working opening 31 overlapping groove 19 and flowing through opening 32 into the interior of the spool 14 and from there to the low pressure port 5.

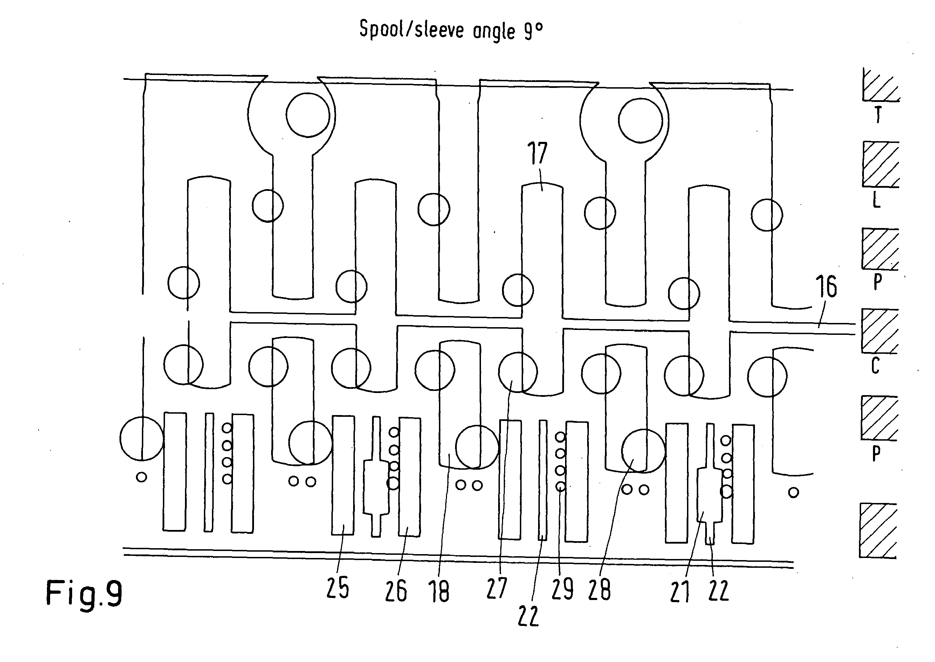

Basically the same situation remains during the "normal" operation angles between approximately 5° and approximately 9°. Fig. 9 shows the situation at an angle of 9° relative rotation between the spool 14 and the sleeve 15. The only difference to the situation shown in Fig. 8 is that the overlapping areas are partly larger and partly smaller than in Fig. 8. Therefore, the neutral orifice Ad is almost fully closed and the other orifices A2-A5 have almost their maximum aperture cross sections. During this "normal" steering the openings 25, 26 do not overlap the auxiliary openings 29.

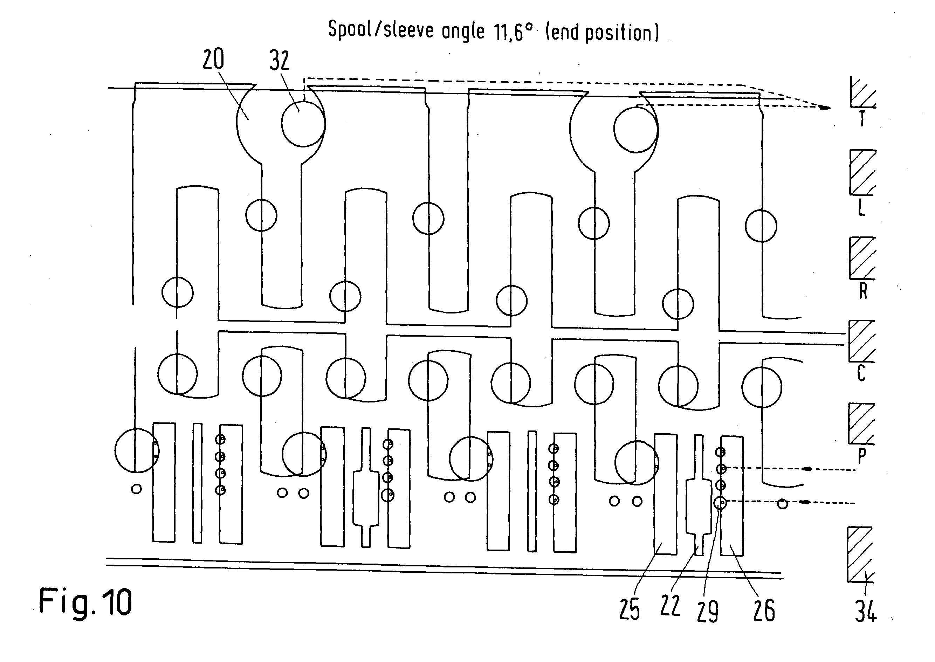

This situation changes when the relative rotation between spool 14 and sleeve 15 reaches the end position (Fig. 10). In this case the auxiliary openings 29 come into overlapping with openings 26 (in one steering direction) or with openings 25 (in the other steering direction). In this case pressure fluid from groove P flows more or less directly from the auxiliary openings 29 into openings 26 in the spool 14 and therefore into the interior 24 of the spool 14. From the interior 24 of the spool the fluid comes back through openings 20 in the spool 14 and openings 32 in the sleeve 15 to the groove T in the housing 34 which is connected to the low pressure port 5.

At this time, although inlet orifice A2 is still open, there is no sufficient pressure to operate the flow meter 11 since the pressurised hydraulic fluid out of groove P is directly returned to the low pressure groove T in the housing 34 controlled only by the opening degree of the end stop orifice AN.

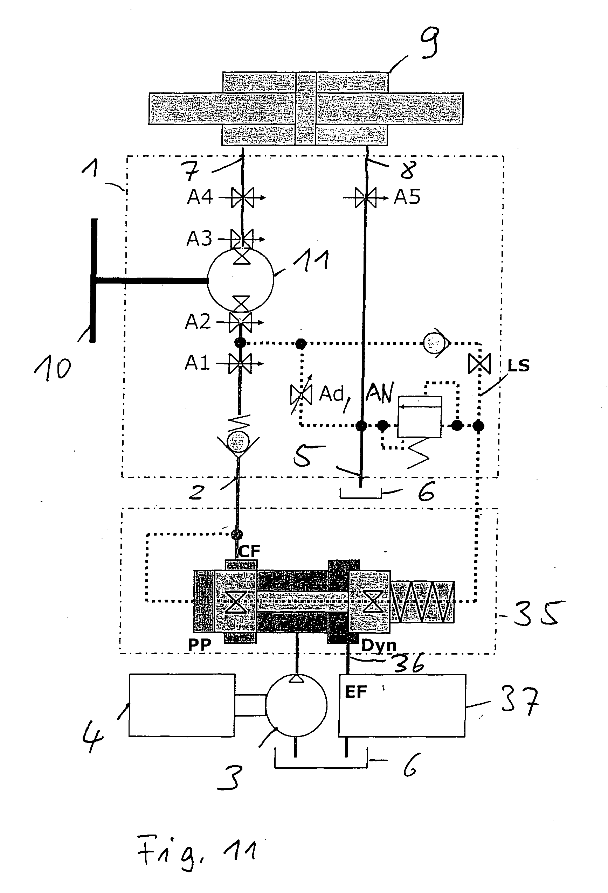

Fig. 11 shows in schematic form the circuit diagram of a further steering unit. The reference numerals used in the previous figures are used for the same elements.

In this case the neutral orifice Ad and the end stop orifice AN are made by the same element, i.e. they comprise at least one common opening in the spool and/or the sleeve. When the steering wheel 10 is turned, the neutral orifice Ad closes for example at an angle of 2°. When the steering wheel 11 is turned further, the neutral orifice Ad opens again forming the end stop orifice.

The steering unit shown in Fig. 11 is a load sensing steering unit having a priority valve 35 arranged between the pump 3 and the pressure port 2 of the steering unit 1. The priority valve 35 has an additional outlet port 36 connected to other hydraulic consumers 37.

A load sensing line LS is connected with the priority valve 35. When the neutral orifice Ad closes, the LS-line generates a higher pressure controlling the priority valve 35 to deliver more hydraulic fluid to the steering unit 1. When the end stop orifice AN opens, the pressure in the LS-line is reduced so that the priority valve 35 reduces the amount of hydraulic fluid delivered to the steering unit 1.

Such a behaviour is of course possible with two separate orifices forming a neutral orifice Ad and an end stop orifice AN.

## Claims

1. Hydraulic steering unit (1) comprising a supply port arrangement having a high pressure port (2) and a low pressure port (5), a working port arrangement having two working ports (7, 8), and control means arranged between the supply port arrangement and the working port arrangement and having a flow meter (11) and valving means, the valving means being connectable to a steering element (10) and defining orifices (Ad, A2-A5, AN), the orifices changing their area between a neutral position, a normal operating position and a maximum displacement position for each working port (7, 8), **characterised in that** in the maximum displacement position an end stop orifice (AN) connects the high pressure port (2) upstream the flow meter (11) with the low pressure port (5).

2. Hydraulic steering unit according to claim 1, **characterised in that** an inlet orifice (A2) is arranged upstream the flow meter (11) and the end stop orifice (AN) opens faster than the inlet orifice (A2).

3. Hydraulic steering unit according to claim 1 or 2, **characterised in that** a neutral orifice (Ad) is arranged parallel to the end stop orifice (AN) wherein the neutral orifice (Ad) reaches its minimum opening area before the end stop orifice (AN) starts opening.

4. Hydraulic steering unit according to anyone of claims 1 to 3, **characterised in that** the valving means comprises a sleeve (15) arranged in a housing (34) and a spool (14) arranged within the sleeve (15), wherein the end stop orifice (AN) starts opening at a turning angle between the spool (14) and the sleeve (15) greater than or equal 9°.

5. Hydraulic steering unit according to claim 4, **characterised in that** the neutral orifice (Ad) comprises a first opening (22) in the spool (14) and the end stop orifice (AN) comprises for each working direction a second opening (25, 26) in the spool (14) arranged in a predetermined distance in circumferential direction relative to the first opening (22).

6. Hydraulic steering unit according to anyone of claims 1 to 5, **characterised in that** the neutral orifice (Ad) and the end stop orifice (AN) comprise at least one common opening.
